(19) Europäisches Patentamt / European Patent Office / Office européen des brevets

(11) **EP 1 794 636 B1**

(12) **EUROPÄISCHE PATENTSCHRIFT**

(45) Veröffentlichungstag und Bekanntmachung des Hinweises auf die Patenterteilung:
**02.06.2010 Patentblatt 2010/22**

(21) Anmeldenummer: **05792267.6**

(22) Anmeldetag: **21.09.2005**

(51) Int Cl.:
*G02B 21/02* *(2006.01)*  *G02B 21/22* *(2006.01)*

(86) Internationale Anmeldenummer:
**PCT/EP2005/010195**

(87) Internationale Veröffentlichungsnummer:
**WO 2006/037474 (13.04.2006 Gazette 2006/15)**

(54) **OBJEKTIV FÜR STEREOMIKROSKOPE**

OBJECTIVE FOR STEREOMICROSCOPES

OBJECTIF DE STEREOMICROSCOPE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.10.2004 DE 102004048298**

(43) Veröffentlichungstag der Anmeldung:
**13.06.2007 Patentblatt 2007/24**

(73) Patentinhaber: **Carl Zeiss MicroImaging GmbH 07745 Jena (DE)**

(72) Erfinder:
- **WINTEROT, Johannes 07745 Jena (DE)**
- **ANDERSSON, Elke 81375 München (DE)**

(74) Vertreter: **Niestroy, Manfred et al Patentanwälte Geyer, Fehners & Partner Sellierstrasse 1 07745 Jena (DE)**

(56) Entgegenhaltungen:
**EP-A- 1 369 729    CH-A- 499 120**
**US-A- 5 852 515    US-B1- 6 226 119**

- **ZIMMER K-P: "OPTICAL DESIGNS FOR STEREOMICROSCOPES" PROCEEDINGS OF THE SPIE, SPIE, BELLINGHAM, VA, US, Bd. 3482, 1998, Seiten 690-697, XP009013507 ISSN: 0277-786X**
- **PATENT ABSTRACTS OF JAPAN Bd. 2000, Nr. 22, 9. März 2001 (2001-03-09) -& JP 2001 147378 A (NIKON CORP), 29. Mai 2001 (2001-05-29)**
- **PATENT ABSTRACTS OF JAPAN Bd. 2000, Nr. 25, 12. April 2001 (2001-04-12) -& JP 2001 221955 A (NIKON CORP), 17. August 2001 (2001-08-17)**

**Beschreibung**

Die Erfindung bezieht sich auf ein Objektiv für Stereomikroskope nach der Teleskopbauweise mit variabler Vergrößerung, bei denen das von einem außeraxialen Punkt eines Objektes kommende Licht unter einem Feldwinkel $\omega$ in Vergrößerungssysteme eintritt, die dem Objektiv nachgeordnet sind.

In Stereomikroskopen dieser Bauweise werden zwecks Erzielung des stereoskopischen Eindrucks zwei getrennte Lichtbündel durch ein und dasselbe objektiv geführt, was zur Folge hat, dass die Linsendurchmesser eines solchen Objektivs bedeutend größer sind als bei Objektiven für die monoskopische Untersuchung von Objekten oder bei Stereomikroskopen des Greenough - Typs.

Die Objektive werden meist im Zusammenhang mit Nachvergrößerungssystemen genutzt, mit denen die Mikroskopvergxößerung vorgegeben werden kann. Auf der dem Objekt abgewandten Seite des Objektivs treten die beiden Lichtbündel parallel zueinander ausgerichtet in die Nachvergrößerungssysteme ein. Die Eintrittspupillen der beiden Nachvergrößerungssysteme weisen dabei einen als Stereobasis bezeichneten Abstand B zueinander auf. Durchdringen sich diese Eintrittspupillen gegenseitig nicht, gilt allgemein:

$$(1) \qquad D_{AP} \geq B + D_{EP}$$

$$(2) \qquad D_{EP} \leq B$$

mit $D_{AP}$ dem Durchmesser der Austrittspupille am Objektiv und $D_{EP}$ dem Durchmesser der Eintrittspupille an den Nachvergrößerungssystemen. Wird bei einem Stereomikroskop dieser Bauart die Bedingung der förderlichen Vergrößerung eingehalten, so wird der Durchmesser der Eintrittspupillen $D_{EP}$ bei maximaler Vergrößerung am weitesten ausgenutzt.

Das von verschiedenen Punkten des Objekts kommende Licht tritt unter verschiedenen Winkeln in die Nachvergrößerungssysteme ein. Dieser meist als Feldwinkel bezeichnete Winkel $\omega$, unter dem das Licht beispielsweise von einem außeraxialen Punkt P am Objekt kommend in das jeweils zugeordnete Nachvergrößerungssystem eintritt, ist von der vorgegebenen Vergrößerung abhängig. Bei der kleinstmöglich eingestellten Vergrößerung hat der Winkel $\omega$ sein Maximum.

Um dem Kunden die Benutzung des Mikroskopierens mit Vergrößerungen zu ermöglichen, die sowohl die Übersichtsabbildung eines Objektes als auch Detaildarstellungen ohne die Notwendigkeit des Objektivwechsel erlauben, sind Objektive erforderlich, bei denen mehr Raum für geeignete Nachvergrößerungssysteme verfügbar ist und die außerdem auch im Objektraum eine größere nutzbare Apertur bieten. Außerdem werden die Anforderungen an die Objektive im Hinblick auf die Korrektion des Farbfehlers, der Bildfeldebnung und der Vermeidung von Verzeichnungen immer höher.

Aus US 6,271,971 ist ein Objektiv für Stereomikroskope in Teleskopbauweise beschrieben, dem als Aufgabe die Optimierung des Verhältnisses von erforderlichem Bauraum zur Objektivbrennweite zugrunde liegt.

In JP 2001-147378 ist der Aufbau von Objektiven beschrieben, die zur Nutzung in Stereomikroskopen nach Teleskopbauweise vorgesehen sind, Sie bestehen vom Mikroskopkörper her betrachtet aus einer ersten Linsengruppe positiver Brechkraft, einer zweiten Linsengruppe, die mindestens ein Dreifachkittglied enthält und einer dritten Linsengruppe positiver Brechkraft. Dabei schließt die Bezeichnung Linsengruppe sowohl einzelne Linsen, Kittglieder oder auch Kombinationen hiervon ein.

Eine davon abweichende Bauweise für Objektive, die ebenfalls für Stereomikroskope nach der Teleskopbauweise geeignet sind, ist in JP 2001-21955 dargestellt. Die hier vorgeschlagenen Objektive bestehen vom Mikroskopkörper aus betrachtet aus einer ersten Linsengruppe mit positiver Brechkraft, in der ein bikonvexes Kittglied enthalten ist, und aus einer zweiten Linsengruppe, in der mindestens zwei Kittglieder enthalten sind. Auch hier schließt die Bezeichnung Linsengruppe sowohl Einzellinsen, Kittglieder und auch Kombinationen hiervon ein.

In EP 1 369 729 A2 wird ein Objektiv für Stereomikroskope vom Teleskop - Typ beschrieben, welches aus drei optischen Baugruppen besteht, wobei die erste Baugruppe zur Objektseite hin und die dritte Baugruppe zu einem Vergrößerungswechsler hin angeordnet ist. Erfindungsgemäß gilt hierbei die Bedingung $0{,}44 \leq ENP/F \leq 0{,}6$, wobei ENP der Durchmesser der Eintrittspupille des Vergrößerungswechslers bei höchster Vergrößerung und F die Brennweite des Objektivs ist. Der Feldwinkel (tan) ist dabei $\geq 0{,}16$. Die praktische Realisierbarkeit bei einer Brennweite F von größer 60 wird als kritisch angesehen. Ferner ist aus der Sicht des Kunden und der Technologie der geringe freie Arbeitsabstand, die relativ große Dicke der Linse der ersten Baugruppe und die Negativlinse der ersten Kittgruppe problematisch. Die Negativlinse der ersten Kittgruppe ist ein stark durchgebogener Meniskus. Diese Form ist instabil beim Verkitten und erfordert eine hohe Passegenauigkeit für beide Kittradien. Ferner besteht die Positivlinse des Kittgliedes im beschriebenen Ausführungsbeispiel aus einem weichen Material und ist unter den genannten Randbedingungen technologisch schwierig zu verwirklichen.

Mit den Objektiven, die in den vorstehend zitierten Veröffentlichungen beschrieben sind, gelingt die Korrektion des Farbfehlers, der Bildfeldebnung und der Verzeichnung nur bedingt. Auch die Forderungen nach mehr Bauraum für die Nachvergrößerungssysteme und größerer nutzbarer Apertur im Objektraum wird nicht den aktuellen Anforderungen entsprechend erfüllt.

Von diesem Stand der Technik ausgehend liegt der Erfindung die Aufgabe zugrunde, ein Objektiv für Stereomikroskope der Teleskopbauweise zu entwickeln, das die Anforderungen im Hinblick auf Korrektion des Farbfehlers, der Bildfeldebnung und der Verzeichnung wie auch die Forderungen nach mehr Raum für die Nachvergrößerungssysteme und größerer nutzbarer Apertur im Objektraum weitergehend erfüllt, als dies der Stand der Technik vermag.

Die der Erfindung zugrunde liegende Aufgabe wird mit einem Objektiv für Stereomikroskope der eingangs beschriebenen Art gelöst, das aus zwei Linsengruppen LG1 und LG2 besteht, wobei

- die erste Linsengruppe LG1 näher zur Objektebene liegt als die zweite Linsengruppe LG2,
- die erste Linsengruppe LG1 aus drei Linsen besteht, von denen, von der Objektebene aus betrachtet, die erste Linse und die dritte Linse jeweils positive Brechkraft haben, die zweite Linse negative Brechkraft hat und die erste Linse und die zweite Linse miteinander verkittet sind,
- die zweite Linsengruppe LG2 aus drei Linsen besteht, von denen, von der Objektebene aus betrachtet, die erste Linse und die zweite Linse positive Brechkraft haben, die dritte Linse negative Brechkraft hat und die zweite Linse mit der dritten Linse zu einem Meniskus negativer Brechkraft mit konvexer Krümmung zur Objektebene verkittet ist,
- die Gesamtbrennweite $f'_{Objektiv}$ = 100 mm beträgt, und
- die Radien r in mm, die Dicken d in mm, die Abstände a in mm, die Brechzahlen $n_e$ bei einer Wellenlänge von 546.07 nm und die Abbezahlen $\nu_e$ wie folgt ausgeführt sind:

| | | r | d | a | $n_e$ | $\nu_e$ |
|---|---|---|---|---|---|---|
| Objektebene | | | | | | |
| | | | | 61.80600 | | |
| LG1 | | -258.51300 | | | | |
| | 1.1 | | 14.46000 | | 1.487940 | 84.07 |
| | | -30.06750 | | | | |
| | 1.2 | | 4.00000 | | 1.616640 | 44.27 |
| | | -88.22520 | | | | |
| | | | | 8.15800 | | |
| | | 344.71300 | | | | |
| | 1.3 | | 16.06000 | | 1.530190 | 76.58 |
| | | -77.74390 | | | | |
| | | | | 0.40000 | | |
| LG2 | | 244.08300 | | | | |
| | 2.1 | | 12.00000 | | 1.668830 | 35.73 |
| | | -191.12700 | | | | |
| | | | | 0.05000 | | |
| | | 1.27670 | | | | |
| | 2.21 | | 12.00000 | | 1.487940 | 84.07 |
| | | -107.46370 | | | | |
| | 2.22 | | 4.00000 | | 1.616640 | 44.27 |
| | | 51.95820 | | | | |

Die der Erfindung zugrunde liegende Aufgabe wird mit einem weiteren, ebenfalls aus zwei Linsengruppen LG1 und LG2 bestehenden Objektiv gelöst, bei dem ebenfalls die erste Linsengruppe LG1 näher zur Objektebene liegt als die zweite Linsengruppe LG2, wobei jedoch

- die erste Linsengruppe aus fünf Linsen (besteht, von denen, von der Objektebene aus betrachtet, die erste Linse, die dritte Linse und die vierte Linse positive Brechkraft, die zweite Linse und die fünfte Linse negative Brechkraft haben und die zweite Linse und die dritte Linse sowie die vierte Linse und die fünfte Linse miteinander verkittet sind,

- die zweite Linsengruppe LG2 aus drei Linsen besteht, von denen, von der Objektebene aus betrachtet, die erste Linse und die zweite Linse positive Brechkraft haben, die dritte Linse negative Brechkraft hat und die zweite Linse mit der dritten Linse zu einem Meniskus negativer Brechkraft mit konvexer Krümmung zur Objektebene verkittet ist,
- die Gesamtbrennweite $f'_{Objektiv}$ = 50 mm beträgt, und
- die Radien r in mm, die Dicken d in mm, die Abstände a in mm, die Brechzahlen $n_e$ bei einer Wellenlänge von 546.07 nm und die Abbezahlen $\nu_e$ wie folgt ausgeführt sind:

| | | r | d | a | $n_e$ | $\nu_e$ |
|---|---|---|---|---|---|---|
| Objektebene | | | | | | |
| | | | | 31.99693 | | |
| LG1 | | -334.94300 | | | | |
| | 1.1 | | 13.10000 | | 1.530190 | 76.58 |
| | | -39.24230 | | | | |
| | | | | 10.50000 | | |
| | | -515.78900 | | | | |
| | 1.2 | | 7.50000 | | 1.677629 | 32.00 |
| | | 69.28260 | | | | |
| | 1.3 | | 17.25000 | | 1.498450 | 81.13 |
| | | -81.16600 | | | | |
| | | | | 0.15000 | | |
| | | 131.46350 | | | | |
| | 1.4 | | 17.90000 | | 1.498450 | 81.13 |
| | | -51.95820 | | | | |
| | 1.5 | | 6.60000 | | 1.616640 | 44.27 |
| | | -386.81700 | | | | |
| | | | | 0.15000 | | |
| LG2 | | 73.91790 | | | | |
| | 2.1 | | 11.50000 | | 1.498450 | 81.13 |
| | | -294.27300 | | | | |
| | | | | 0.92221 | | |
| | | 95.03140 | | | | |
| | 2.21 | | 8.90000 | | 1.791789 | 25.89 |
| | | -258.51300 | | | | |
| | 2.22 | | 5.80000 | | 1.658030 | 39.40 |
| | | 39.24230 | | | | |

Bei beiden Objektiven steht die Brennweite $f'_{LG2}$ der zweiten Linsengruppe LG2 mit der Gesamtbrennweite $f'_{Objektiv}$ in der Beziehung

$$0,1 - 1,8723/f'_{Objektiv} \leq 1/f'_{LG2} \leq 0,2 - 1,8723/f'_{Objektiv}$$

Die Gesamtbrennweite $f'_{Objektiv}$ liegt bei beiden Objektiven vorteilhaft in einem Bereich von 40 mm $\leq f'_{Objektiv}$ $\leq$ 160 mm.

Weiterhin von Vorteil ist es, daß beide Objektive mit einer Austrittspupille mit dem Durchmesser $D_{AP}$ = 47 mm ausgeführt sind. Damit liegt der Durchmesser der Austrittspupille in einem Bereich $D_{AP} \geq$ 42 mm, so daß bei am Mikroskop kleinstmöglich eingestellter Vergrößerung Feldwinkel $\omega$ von $\tan(\omega) \geq 0,16$ möglich sind.

Im Rahmen der Erfindung liegt daher auch die Verwendung der vorgenannten Objektive in Stereomikroskopen der Teleskopbauweise mit variabler Vergrößerung, bei denen das von einem außeraxialen Punkt eines Objektes kommende Licht unter einem Feldwinkel ω in Vergrößerungssysteme eintritt und die mit Vergrößerungswechsler ausgestattet sind, bei denen in der kleinstmöglichen Vergrößerung tan (ω) ≥ 0,16 erreicht wird.

Das erfindungsgemäße Objektiv soll nachfolgend anhand von zwei Ausführungsbeispielen näher erläutert werden. In den zugehörigen Zeichnungen zeigen

Fig.1 den aus dem Stand der Technik bekannten Aufbau eines Sterevmikroskops vom Teleskoptyp in einer zur Erläuterung dienenden Prinzipdarstellung,

Fig.2 den Aufbau des erfindungsgemäßen Objektivs in einer ersten Ausgestaltungsvariante,

Fig.3 den Aufbau des erfindungsgemäßen Objektivs in einer zweiten Ausgestaltungsvariante.

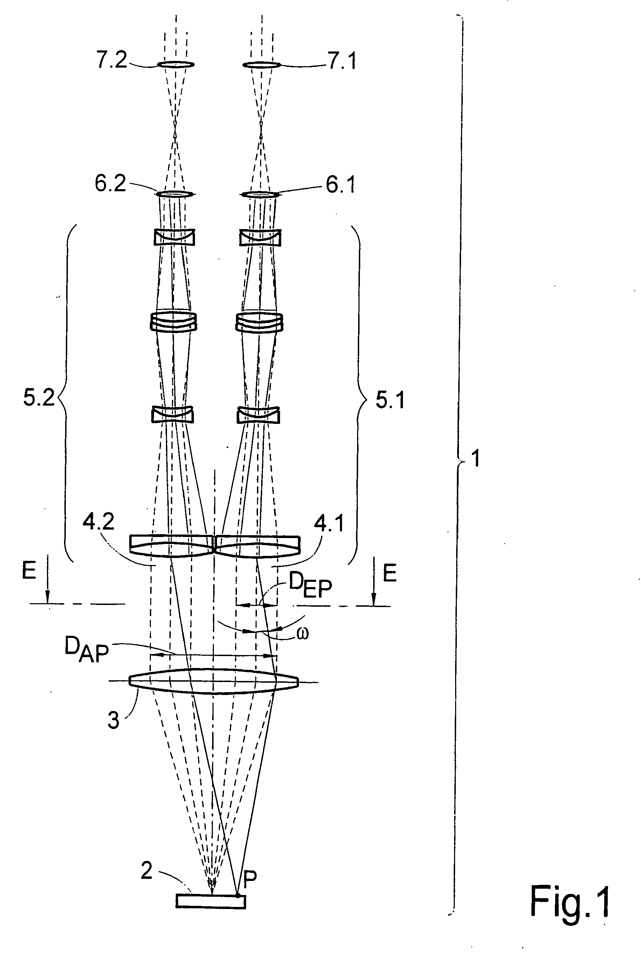

In Fig.1 ist der Aufbau eines Stereomikroskops 1 vom Teleskoptyp im Prinzip dargestellt, wie es zur Zeit im Stand der Technik zur stereoskopischen Betrachtung eines Objektes 2 genutzt wird.

Das Stereomikroskop 1 besitzt ein Objektiv 3, welches das vom Objekt 2 kommende Licht aufsammelt. Die Austrittspupille des Objektivs 3, auf der dem Objekt 2 abgewandten Seite befindlich, hat einen Durchmesser $D_{AP}$.

Von der Austrittspupille des Objektivs 3 tritt das Licht in zwei parallel zueinander ausgerichteten Lichtbündeln 4.1, 4.2 in zwei Nachvergrößerungssysteme ein, die in Form von Vergrößerungswechslern 5.1, 5.2 ausgebildet sind. Die Vergrößerungswechsler 5.1, 5.2 ermöglichen es dem Benutzer, während der Beobachtung des Objektes 2 unterschiedliche Vergrößerungen einzustellen.

Dabei tritt das beispielsweise von einem außeraxialen Punkt P des Objektes kommende Licht unter einem Winkel ω in die Vergrößerungswechsler 5.1, 5.2 ein, der mit der Änderung der Vergrößerungseinstellung variiert. Der Winkel ω hat seinen maximalen Wert, wenn die kleinstmögliche Vergrößerung eingestellt ist.

Die Eintrittspupillen der Vergrößerungswechsler 5.1, 5.2 haben jeweils einen Durchmesser $D_{EP}$, der ebenfalls von der eingestellten Vergrößerung abhängig ist. Der Durchmesser $D_{EP}$ der Eintrittspupille ist um so größer, je höher die Vergrößerung eingestellt ist. Er hat seinen maximalen Wert, wenn die maximale Vergrößerung eingestellt ist.

Den Vergrößerungswechslern 5.1, 5.2 im Strahlengang nachgeordnet sind jeweils ein Tubuslinsensystem 6.1, 6.2 sowie ein Okular 7.1, 7.2.

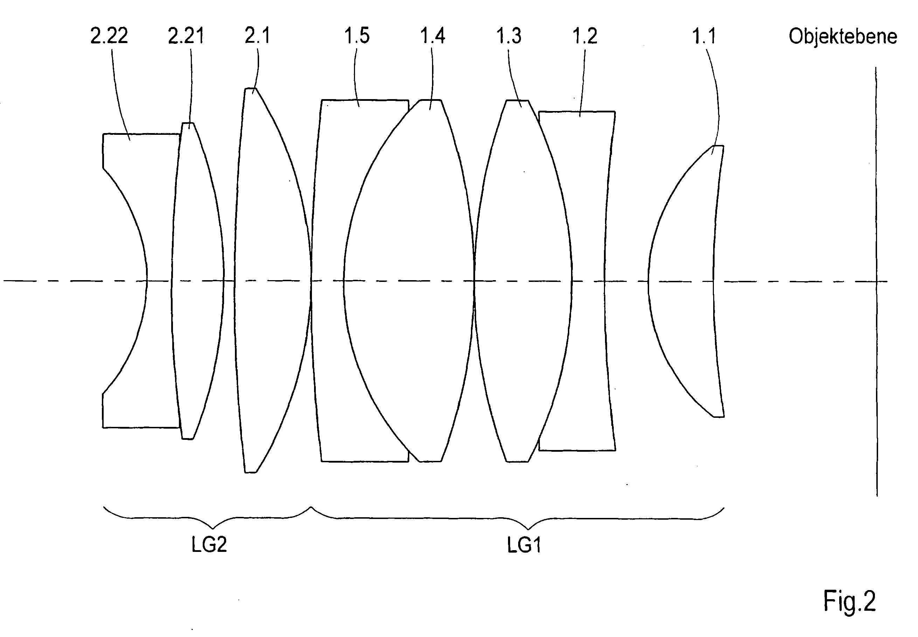

In einer ersten, in Fig.2 dargestellten Ausführungsbeispiel des erfindungsgemäßen Objektivs 3 sind (von der Objektebene aus betrachtet in Richtung zur Bildebene) eine erste Linsengruppe LG1 und nachfolgend eine zweite Linsengruppe LG2 vorgesehen. Die Linsengruppen LG1 und LG2 haben jeweils positive Brechkraft.

Die erste Linsengruppe LG1 besteht in diesem Ausführungsbeispiel aus fünf Linsen, von denen (von der Objektebene aus gesehen) die erste Linse 1.1, die dritte Linse 1.3 und die vierte Linse 1.4 jeweils positive Brechkraft haben. Die zweite Linse 1.2 und fünfte Linse 1.5 haben negative Brechkraft. Die zweite Linse 1.2 und die dritte Linse 1.3 sowie die vierte Linse 1.4 und die fünfte Linse 1.5 sind jeweils miteinander verkittet.

Wie aus Fig.2 weiterhin ersichtlich, besteht die zweite Linsengruppe LG2 (von der Objektebene aus betrachtet) aus drei Linsen 2.1, 2.21, 2.22, von denen die Linsen 2.1 und 2.21 positive Brechkraft haben, während die Linse 2.22 negative Brechkraft hat. Die zweite Linse 2.21 und die dritte Linse 2.22 sind miteinander verkittet und bilden zusammen einen Meniskus negativer Brechkraft mit konvexer Seite zur Objektebene.

In dem Ausführungsbeispiel nach Fig.2 weist das erfindungsgemäße Objektiv 3 eine Gesamtbrennweite f'$_{Objektiv}$ = 50 mm und eine Austrittspupille mit dem Durchmesser $D_{AP}$ = 47 mm auf und ist ausgelegt für Nachvergrößerungssysteme, bei denen in der niedrigsten Vergrößerung tan(ω) = 0,18 erreicht wird. Es gelten folgende Konstruktionsdaten mit den Radien r in mm, den Dicken d in mm, den Abständen a in mm, den Brechzahlen $n_e$ bei einer Wellenlänge von 546.07 nm und den Abbezahlen $\nu_e$:

| | r | d | a | $n_e$ | $\nu_e$ |
|---|---|---|---|---|---|
| Objektebene | | | | | |
| | | | 31.99693 | | |

(fortgesetzt)

| | | r | d | a | n_e | ν_e |
|---|---|---|---|---|---|---|
| Objektebene | | | | | | |
| LG1 | 1.1 | -334.94300 | | | | |
| | | -39.24230 | 13.10000 | | 1.530190 | 76.58 |
| | | | | 10.50000 | | |
| | 1.2 | -515.78900 | 7.50000 | | 1.677629 | 32.00 |
| | | 69.28260 | | | | |
| | 1.3 | | 17.25000 | | 1.498450 | 81.13 |
| | | -81.16600 | | | | |
| | | | | 0.15000 | | |
| | 1.4 | 131.46350 | 17.90000 | | 1.498450 | 81.13 |
| | | -51.95820 | | | | |
| | 1.5 | -386.81700 | 6.60000 | | 1.616640 | 44.27 |
| | | | | 0.15000 | | |
| LG2 | 2.1 | 73.91790 | 11.50000 | | 1.498450 | 81.13 |
| | | -294.27300 | | | | |
| | | | | 0.92221 | | |
| | 2.21 | 95.03140 | 8.90000 | | 1.791789 | 25.89 |
| | | -258.51300 | | | | |
| | 2.22 | 39.24230 | 5.80000 | | 1.658030 | 39.40 |

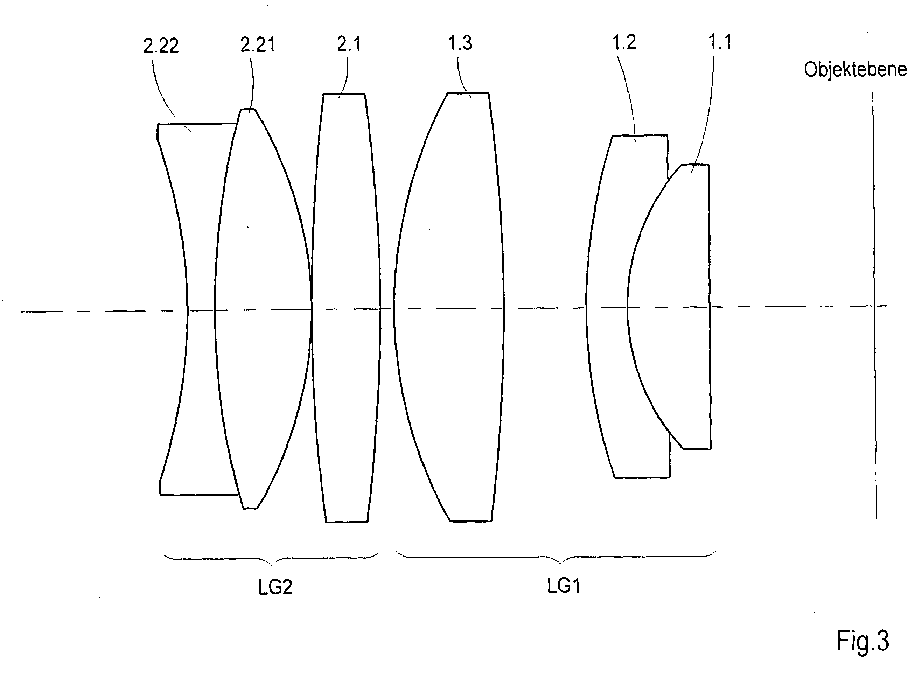

In einem zweiten, in Fig.3 dargestellten Ausführungsbeispiel des erfindungsgemäßen Objektivs 3 besteht die erste Linsengruppe LG1 (von der Objektebene aus betrachtet) aus drei Linsen 1.1, 1.2, 1.3, von denen die erste Linse 1.1 und dritte Linse 1.3 positive Brechkraft haben, die zweite Linse 1.2 negative Brechkraft hat und die erste Linse 1.1 und zweite Linse 1.2 miteinander verkittet sind.

Wie aus Fig.3 weiterhin ersichtlich, besteht die zweite Linsengruppe LG2 (von der Objektebene aus betrachtet) wiederum wie beim ersten Ausführungsbeispiel aus drei Linsen 2.1, 2.21, 2.22, von denen die Linsen 2.1 und 2.21 positive Brechkraft haben, während die Linse 2.22 negative Brechkraft hat. Die zweite Linse 2.21 und die dritte Linse 2.22 sind miteinander verkittet und bilden zusammen einen Meniskus negativer Brechkraft mit konvexer Seite zur Objektebene.

In dieser Ausgestaltung hat das erfindungsgemäße Objektiv 3 eine Gesamtbrennweite f'$_{Objektiv}$ = 100 mm und eine Austrittspupille mit dem Durchmesser D$_{AP}$ = 47 mm und ist ausgelegt für Nachvergrößerungssysteme, bei denen in der niedrigsten Vergrößerung tan(ω) = 0,18 erreicht wird. Hier gelten folgende Konstruktionsdaten mit den Radien r in mm, den Dicken d in mm, den Abständen a in mm, den Brechzahlen n$_e$ bei einer Wellenlänge von 546.07 nm und den Abbezahlen ν$_e$:

| | r | d | a | n_e | ν_e |
|---|---|---|---|---|---|
| Objektebene | | | | | |
| | | | 61.80600 | | |

(fortgesetzt)

|  | | r | d | a | $n_e$ | $\nu_e$ |
|---|---|---|---|---|---|---|
| Objektebene | | | | | | |
| LG1 | | -258.51300 | | | | |
| | 1.1 | | 14.46000 | | 1.487940 | 84.07 |
| | | -30.06750 | | | | |
| | 1.2 | -88.22520 | 4.00000 | | 1.616640 | 44.27 |
| | | | | 8.15800 | | |
| | | 344.71300 | | | | |
| | 1.3 | -77.74390 | 16.06000 | | 1.530190 | 76.58 |
| | | | | 0.40000 | | |
| LG2 | | 244.08300 | | | | |
| | 2.1 | -191.12700 | 12.00000 | | 1.668830 | 35.73 |
| | | | | 0.05000 | | |
| | | 71.27670 | | | | |
| | 2.21 | | 12.00000 | | 1.487940 | 84.07 |
| | | -107.46370 | | | | |
| | 2.22 | | 4.00000 | | 1.616640 | 44.27 |
| | | 51.95820 | | | | |

Die Austrittspupille des Objektivs 3 hat in beiden Ausführungsbeispielen jeweils einen Durchmesser $D_{AP}$ = 47 mm.

Besonders vorteilhaft erfüllt das Objektiv 3 in den vorgenannten Ausführungsbeispielen die Bedingung:

$$0,0003/f'_{Objektiv} \leq \Delta P_{g.F2.1}/(\nu_{e2.1} * f'_{2.1}) + \Delta P_{g.F2.21}/(\nu_{e2.21} * f'_{2.21}) + \Delta P_{g.F2.22}/(\nu_{e2.22} * f'_{2.22}) \leq 0,0003/f'_{Objektiv} + 0,001$$

mit $f'_{Objektiv}$ der Gesamtbrennweite des Objektivs 3, $f'_{2.1}$ der Brennweite der Linse 2.1, $f'_{2.21}$ der Brennweite der Linse 2.21, $f'_{2.22}$ der Brennweite der Linse 2.22, $\nu_{e2.1}$ der Abbezahl des Mediums der Linse 2.1, $\nu_{e2.21}$ der Abbezahl des Mediums der Linse 2.21, $\nu_{e2.22}$ der Abbezahl des Mediums der Linse 2.22, $\Delta P_{g.F2.1}$ der Abweichung des Mediums der Linse 2.1 von der Normalgeraden, $\Delta P_{g.F2.21}$ der Abweichung des Mediums der Linse 2.21 von der Normalgeraden, $\Delta P_{g.F2.22}$ der Abweichung des Mediums der Linse 2.22 von der Normalgeraden.

Die Abweichung von der Normalgeraden wird erfindungsgemäß gezielt zur Farbkorrektur genutzt. Für das hier beschriebene Objektiv werden Gläser gewählt, bei denen die Teildispersion definiert von der Normalgeraden abweicht. Die Definition und Zusammenhänge der Begriffe Teildispersion und Normalgerade sind im Rahmen der Erfindung zu verstehen wie angegeben im "Lexikon der Optik", Spektrum Akademischer Verlag Heidelberg Berlin, 2003.

Es werden bevorzugt Glasarten verwendet, für die die Abweichungen von der Normalgeraden durch Veröffentlichung des Herstellers, der Firma Schott Glas, Mainz, Deutschland, anhand von Wertpaaren festgelegt worden sind (Taschenkatalog "Optisches Glas" der Firma Schott Mainz, Version 1.5, 05/2003).

Für das Ausführungsbeispiel des erfindungsgemäßen Objektivs nach Fig.2 gelten $\Delta P_{g.F2.1}$ = 0,03, $\Delta P_{g.F2.21}$ = 0,01 und $\Delta P_{g.F2.22}$ = -0,01.

Für das Ausführungsbeispiel des Objektivs nach Fig.3 sind vorgegeben $\Delta P_{g.F2.1}$ = 0,01, $\Delta P_{g.F2.21}$ = 0,03 und $\Delta P_{g.F2.22}$ = -0,01.

Die Indizes g und F bezeichnen jeweils Wellenlängen, wobei g der Wellenlänge 435,8343 nm (blaue Quecksilberlinie) und F der Wellenlänge 486,1327 nm (blaue Wasserstofflinie) entsprechen.

Mit dem erfindungsgemäßen Objektiv 3 ergeben sich Vorteile im Hinblick auf die Korrektion des Farbfehlers, der Bildfeldebnung und der Verzeichnung wie auch bezüglich der Forderung nach größeren Räumen für die Nachvergrößerungssysteme und nach einer größeren nutzbaren Apertur im Objektraum.

Bei der Lösung des Standes der Technik nach EP 1 369 729 A2 ergäbe sich beispielsweise bei einer Brennweite F = 50 ein Wert für den ersten Abstand von 42,13*50/100=21,065 mm. Mit dem erfindungsgemäßen Objektiv wäre dieser Abstand 31,99 mm, so dass er um über 50% vergrößert wird. Auch hinsichtlich der Dicke der ersten linse, die nach EP 1 369 729 A2 48,69/100*50=24,345 mm beträgt, liegt der Vergleichswert bei der erfindungsgemäßen Lösung lediglich bei 13,1 mm.

**Bezugszeichenliste**

| | |
|---|---|
| 1 | Stereomikroskop |
| 1.1, ..., 1.5 | Linse |
| 2 | Objekt |
| 2.1, 2.21, 2.22 | Linse |
| 3 | Objektiv |
| 4.1, 4.2 | Lichtbündel |
| 5.1, 5.2 | Vergrößerungswechsler |
| 6.1, 6.2 | Tubuslinsensystem |
| 7,1, 7.2 | Okular |

| | |
|---|---|
| $D_{AP}$ | Durchmesser der Austrittspupille |
| $D_{EP}$ | Durchmesser der Eintrittspupille |
| LG1, LG2 | Linsengruppe |
| P | außeraxialer Punkt |
| $\omega$ | Winkel |

**Patentansprüche**

1. Objektiv für Stereomikroskope der Teleskopbauweise mit variabler Vergrößerung, bei denen das von einem außeraxialen Punkt eines Objektes kommende Licht unter einem Feldwinkel $\omega$ in Vergrößerungssysteme eintritt, die dem Objektiv nachgeordnet sind,
**dadurch gekennzeichnet, dass**
das Objektiv (3) aus zwei Linsengruppen LG1 und LG2 besteht, wobei
die erste Linsengruppe LG1 näher zur Objektebene liegt als die zweite Linsengruppe LG2,

- die erste Linsengruppe LG1 aus drei Linsen (1.1, 1.2, 1.3) besteht, von denen, von der Objektebene aus betrachtet, die erste Linse (1.1) und die dritte Linse (1.3) jeweils positive Brechkraft haben, die zweite Linse (1.2) negative Brechkraft hat und die erste Linse (1.1) und die zweite Linse (1.2) miteinander verkittet sind,
- die zweite Linsengruppe LG2 aus drei Linsen (2.1, 2.21, 2.22) besteht, von denen, von der Objektebene aus betrachtet, die erste Linse (2.1) und die zweite Linse (2.21) positive Brechkraft haben, die dritte Linse (2.22) negative Brechkraft hat und die zweite Linse (2.21) mit der dritten Linse (2.22) zu einem Meniskus negativer Brechkraft mit konvexer Krümmung zur Objektebene verkittet ist,
- die Gesamtbrennweite $f'_{Objektiv}$ = 100 mm beträgt, und
- die Radien r in mm, die Dicken d in mm, die Abstände a in mm, die Brechzahlen $n_e$ bei einer Wellenlänge von 546.07 nm und die Abbezahlen $\nu_e$ wie folgt ausgeführt sind:

| | r | d | a | $n_e$ | $\nu_e$ |
|---|---|---|---|---|---|
| Objektebene | | | | | |
| | | | 61.80600 | | |

(fortgesetzt)

|  | | r | d | a | $n_e$ | $\nu_e$ |
|---|---|---|---|---|---|---|
| Objektebene | | | | | | |
| LG1 | | -258.51300 | | | | |
| | 1.1 | | 14.46000 | | 1.487940 | 84.07 |
| | | -30.06750 | | | | |
| | 1.2 | | 4.00000 | | 1.616640 | 44.27 |
| | | -88.22520 | | | | |
| | | | | 8.15800 | | |
| | | 344.71300 | | | | |
| | 1.3 | | 16.06000 | | 1.530190 | 76.58 |
| | | -77.74390 | | | | |
| | | | | 0.40000 | | |
| LG2 | | 244.08300 | | | | |
| | 2.1 | | 12.00000 | | 1.668830 | 35.73 |
| | | -191.12700 | | | | |
| | | | | 0.05000 | | |
| | | 71.27670 | | | | |
| | 2.21 | | 12.00000 | | 1.487940 | 84.07 |
| | | -107.46370 | | | | |
| | 2.22 | | 4.00000 | | 1.616640 | 44.27 |
| | | 51.95820 | | | | |

2. Objektiv für Stereomikroskope der Teleskopbauweise mit variabler Vergrößerung, bei denen das von einem außeraxialen Punkt eines Objektes kommende Licht unter einem Feldwinkel ω in Vergrößerungssysteme eintritt, die dem Objektiv nachgeordnet sind,
**dadurch gekennzeichnet, dass**
das Objektiv (3) aus zwei Linsengruppen LG1 und LG2 besteht, wobei
die erste Linsengruppe LG1 näher zur Objektebene liegt als die zweite Linsengruppe LG2,

- die erste Linsengruppe aus fünf Linsen (1.1, 1.2, 1.3, 1.4, 1.5) besteht, von denen, von der Objektebene aus betrachtet, die erste Linse (1.1), die dritte Linse (1.3) und die vierte Linse (1.4) positive Brechkraft, die zweite Linse (1.2) und die fünfte Linse (1.5) negative Brechkraft haben und die zweite Linse (1.2) und die dritte Linse (1.3) sowie die vierte Linse (1.4) und die fünfte Linse (1.5) miteinander verkittet sind,
- die zweite Linsengruppe LG2 aus drei Linsen (2.1, 2.21, 2.22) besteht, von denen, von der Objektebene aus betrachtet, die erste Linse (2.1) und die zweite Linse (2.21) positive Brechkraft haben, die dritte Linse (2.22) negative Brechkraft hat und die zweite Linse (2.21) mit der dritten Linse (2.22) zu einem Meniskus negativer Brechkraft mit konvexer Krümmung zur Objektebene verkittet ist,
- die Gesamtbrennweite $f'_{Objektiv}$ = 50 mm beträgt, und
- die Radien r in mm, die Dicken d in mm, die Abstände a in mm, die Brechzahlen $n_e$ bei einer Wellenlänge von 546.07 nm und die Abbezahlen $\nu_e$ wie folgt ausgeführt sind:

|  | | r | d | a | $n_e$ | $\nu_e$ |
|---|---|---|---|---|---|---|
| Objektebene | | | | | | |
| | | | | 31.99693 | | |

(fortgesetzt)

|  | | r | d | a | $n_e$ | $\nu_e$ |
|---|---|---|---|---|---|---|
| Objektebene | | | | | | |
| LG1 | | -334.94300 | | | | |
| | 1.1 | | 13.10000 | | 1.530190 | 76.58 |
| | | -39.24230 | | | | |
| | | | | 10.50000 | | |
| | | -515.78900 | | | | |
| | 1.2 | | 7.50000 | | 1.677629 | 32.00 |
| | | 69.28260 | | | | |
| | 1.3 | | 17.25000 | | 1.498450 | 81.13 |
| | | -81.16600 | | | | |
| | | | | 0.15000 | | |
| | | 131.46350 | | | | |
| | 1.4 | | 17.90000 | | 1.498450 | 81.13 |
| | | -51.95820 | | | | |
| | 1.5 | | 6.60000 | | 1.616640 | 44.27 |
| | | -386.81700 | | | | |
| | | | | 0.15000 | | |
| LG2 | | 73.91790 | | | | |
| | 2.1 | | 11.50000 | | 1.498450 | 81.13 |
| | | -294.27300 | | | | |
| | | | | 0.92221 | | |
| | | 95.03140 | | | | |
| | 2.21 | | 8.90000 | | 1.791789 | 25.89 |
| | | -258.51300 | | | | |
| | 2.22 | | 5.80000 | | 1.658030 | 39.40 |
| | | 39.24230 | | | | |

**3.** Objektiv nach Anspruch 1 oder 2, mit einer Austrittspupille mit dem Durchmesser $D_{AP}$ = 47 mm.

**4.** Verwendung eines Objektivs nach den vorgenannten Ansprüchen in Stereomikroskopen der Teleskopbauweise mit variabler Vergrößerung, bei denen das von einem außeraxialen Punkt eines Objektes kommende Licht unter einem Feldwinkel $\omega$ in Vergrößerungssysteme eintritt und die mit Vergrößerungswechsler (5.1, 5.2) ausgestattet sind, bei denen in der kleinstmöglichen Vergrößerung tan($\omega$) $\geq$ 0,16 errecht wird.

## Claims

**1.** An objective for stereomicroscopes of the common main objective (CMO) type with variable magnification, in which the light coming from an extra-axial point of an object enters, at a field angle $\omega$, magnification systems arranged downstream of the objective,
**characterized in that**
the objective (3) consists of two lens groups LG1 and LG2, wherein
the first lens group LG1 is located closer to the object plane than the second lens group LG2,

- the first lens group LG1 consists of three lenses (1.1, 1.2, 1.3), of which the first lens (1.1) and the third lens (1.3), counted from the direction of the object plane, have positive refractive power, the second lens (1.2) has negative refractive power, and the first lens (1.1) and the second lens (1.2) are cemented to each other,
- the second lens group LG2 consists of three lenses (2.1, 2.21, 2.22), of which the first lens (2.1) and the second lens (2.21), counted from the direction of the object plane, have positive refractive power, the third lens (2.22) has negative refractive power, and the second lens (2.21) is cemented to the third lens (2.22) forming a meniscus of negative refractive power with a convex curvature relative to the object plane,
- the total focal length $f'_{objective}$ equals 100 mm, and
- the radii r in mm, the thicknesses $d$ in mm, the distances a in mm, the refractive indices $n_e$ at a wavelength of 546.07 nm and the Abbe numbers $v_e$ are configured as follows:

|  |  | r | d | a | $n_e$ | $v_e$ |
|---|---|---|---|---|---|---|
| Object plane |  |  |  |  |  |  |
|  |  |  |  | 61.80600 |  |  |
| LG1 |  | -258.51300 |  |  |  |  |
|  | 1.1 |  | 14.46000 |  | 1.487940 | 84.07 |
|  |  | -30.06750 |  |  |  |  |
|  | 1.2 |  | 4.00000 |  | 1.616640 | 44.27 |
|  |  | -88.22520 |  |  |  |  |
|  |  |  |  | 8.15800 |  |  |
|  |  | 344.71300 |  |  |  |  |
|  | 1.3 |  | 16.06000 |  | 1.530190 | 76.58 |
|  |  | -77.74390 |  |  |  |  |
|  |  |  |  | 0.40000 |  |  |
| LG2 |  | 244.08300 |  |  |  |  |
|  | 2.1 |  | 12.00000 |  | 1.668830 | 35.73 |
|  |  | -191.12700 |  |  |  |  |
|  |  |  |  | 0.05000 |  |  |
|  |  | 71.27670 |  |  |  |  |
|  | 2.21 |  | 12.00000 |  | 1.487940 | 84.07 |
|  |  | -107.46370 |  |  |  |  |
|  | 2.22 |  | 4.00000 |  | 1.616640 | 44.27 |
|  |  | 51.95820 |  |  |  |  |

2. An objective for stereomicroscopes of the common main objective (CMO) type with variable magnification, in which the light coming from an extra-axial point of an object enters, at a field angle ω, magnification systems arranged downstream of the objective,
**characterized in that**
the objective (3) consists of two lens groups LG1 and LG2, wherein
the first lens group LG1 is located closer to the object plane than the second lens group LG2,

- the first lens group consists of five lenses (1.1, 1.2, 1.3, 1.4, 1.5), of which the first lens (1.1), the third lens (1.3) and the fourth lens (1.4), counted from the direction of the object plane, have positive refractive power, and the second lens (1.2) and the fifth lens (1.5) have negative refractive power, and the second lens (1.2) and the third lens (1.3) are cemented to each other, as are the fourth lens (1.4) and the fifth lens (1.5),
- the second lens group LG2 consists of three lenses (2.1, 2.21, 2.22), of which the first lens (2.1) and the second lens (2.21), counted from the direction of the object plane, have positive refractive power, the third lens (2.22) has negative refractive power, and the second lens (2.21) is cemented to the third lens (2.22) to form a meniscus of negative refractive power with a convex curvature relative to the object plane,
- the total focal length $f'_{objective}$ equals 50 mm, and
- the radii r in mm, the thicknesses $d$ in mm, the distances a in mm, the refractive indices $n_e$ at a wavelength of 546.07 nm and the Abbe numbers $v_e$ are configured as follows:

|  | | r | d | a | $n_e$ | $\nu_e$ |
|---|---|---|---|---|---|---|
| Object plane | | | | | | |
|  | | | | 31.99693 | | |
| LG1 | | -334.94300 | | | | |
|  | | | 13.10000 | | | |
|  | 1.1 | -39.24230 | | | 1.530190 | 76.58 |
|  | | | | 10.50000 | | |
|  | | -515.78900 | | | | |
|  | 1.2 | | 7.50000 | | 1.677629 | 32.00 |
|  | | 69.28260 | | | | |
|  | 1.3 | | 17.25000 | | 1.498450 | 81.13 |
|  | | -81.16600 | | | | |
|  | | | | 0.15000 | | |
|  | | 131.46350 | | | | |
|  | 1.4 | | 17.90000 | | 1.498450 | 81.13 |
|  | | -51.95820 | | | | |
|  | 1.5 | | 6.60000 | | 1.616640 | 44.27 |
|  | | -386.81700 | | | | |
|  | | | | 0.15000 | | |
| LG2 | | 73.91790 | | | | |
|  | 2.1 | | 11.50000 | | 1.498450 | 81.13 |
|  | | -294.27300 | | | | |
|  | | | | 0.92221 | | |
|  | | 95.03140 | | | | |
|  | 2.21 | | 8.90000 | | 1.791789 | 25.89 |
|  | | -258.51300 | | | | |
|  | 2.22 | | 5.80000 | | 1.658030 | 39.40 |
|  | | 39.24230 | | | | |

**3.** An objective as claimed in Claim 1 or 2, with an exit pupil having a diameter $D_{AP}$ = 47 mm.

**4.** Use of an objective as claimed in the preceding claims, in stereomicroscopes of the common main objective (CMO) type with variable magnification, in which the light coming from an extra-axial point of an object enters, at a field angle ω, magnification systems, and which are provided with magnification changers (5.1, 5.2) in which, at the least possible magnification, $tan(\omega) \geq 0.16$ is attained.

## Revendications

**1.** Objectif pour stéréomicroscopes de type télescope à grossissement variable, dans lesquels la lumière provenant d'un point extra-axial d'un objet pénètre sous un angle de champ ω dans des systèmes de grossissement placés en aval de l'objectif,
**caractérisé en ce que**
l'objectif (3) se compose de deux groupes de lentilles LG1 et LG2, dans lequel
le premier groupe de lentilles LG1 est situé plus près du plan objet que le deuxième groupe de lentilles LG2,

   - le premier groupe de lentilles LG1 se compose de trois lentilles (1.1, 1.2, 1.3) dont, vues depuis le plan objet, la première lentille (1.1) et la troisième lentille (1.3) présentent respectivement une puissance positive, la deuxième lentille (1.2) présente une puissance négative et la première lentille (1.1) et la deuxième lentille (1.2) sont collées ensemble,

- le deuxième groupe de lentilles LG2 se compose de trois lentilles (2.1, 2.21, 2.22) dont, vues depuis le plan objet, la première lentille (2.1) et la deuxième lentille (2.21) présentent une puissance positive, la troisième lentille (2.22) présente une puissance négative et la deuxième lentille (2.21) est collée avec la troisième lentille (2.22) en un ménisque de puissance négative avec une courbure convexe vers le plan objet,

- la focale totale f'$_{Objektiv}$ = 100 mm, et

- les rayons r en mm, les épaisseurs d en mm, les distances a en mm, les indices de réfraction n$_e$ à une longueur d'onde de 546,07 nm et les nombres d'Abbe ν$_e$ sont réalisés comme suit :

| | | r | d | a | n$_e$ | ν$_e$ |
|---|---|---|---|---|---|---|
| Plan objet | | | | | | |
| | | | | 61,80600 | | |
| LG1 | | -258,51300 | | | | |
| | 1.1 | | 14,46000 | | 1,487940 | 84,07 |
| | | -30,06750 | | | | |
| | 1.2 | | 4,00000 | | 1,616640 | 44,27 |
| | | -88,22520 | | | | |
| | | | | 8,15800 | | |
| | | 344,71300 | | | | |
| | 1.3 | | 16,0600 | | 1,530190 | 76,58 |
| | | -77,74390 | | | | |
| | | | | 0,40000 | | |
| LG2 | | 244,08300 | | | | |
| | 2.1 | | 12,00000 | | 1,668830 | 35,73 |
| | | -191,12700 | | | | |
| | | | | 0,05000 | | |
| | | 71,27670 | | | | |
| | 2.21 | | 12,00000 | | 1,487940 | 84,07 |
| | | -107,46370 | | | | |
| | 2.22 | | 4,00000 | | 1,616640 | 44,27 |
| | | 51,95820 | | | | |

2. Objectif pour stéréomicroscopes du type télescope à grossissement variable, dans lesquels la lumière provenant d'un point extra-axial d'un objet pénètre sous un angle de champ ω dans des systèmes de grossissement placés en aval de l'objectif,

**caractérisé en ce que**

l'objectif (3) se compose de deux groupes de lentilles LG1 et LG2, dans lequel

le premier groupe de lentilles LG1 est situé plus près du plan objet que le deuxième groupe de lentilles LG2,

- le premier groupe de lentilles LG1 se compose de cinq lentilles (1.1, 1.2, 1.3, 1.4, 1.5) dont, vues depuis le plan objet, la première lentille (1.1), la troisième lentille (1.3) et la quatrième lentille (1.4) présentent une puissance positive, la deuxième lentille (1.2) et la cinquième lentille (1.5) présentent une puissance négative et la deuxième lentille (1.2) et la troisième lentille (1.3) ainsi que la quatrième lentille (1.4) et la cinquième lentille (1.5) sont collées ensemble,

- le deuxième groupe de lentilles LG2 se compose de trois lentilles (2.1, 2.21, 2.22) dont, vues depuis le plan objet, la première lentille (2.1) et la deuxième lentille (2.21) présentent respectivement une puissance positive, la troisième lentille (2.22) présente une puissance négative et la deuxième lentille (2.21) est collée avec la troisième lentille (2.22) en un ménisque de puissance négative avec une courbure convexe vers le plan objet,

- la focale totale f'$_{Objektiv}$ = 50 mm, et

- les rayons r en mm, les épaisseurs d en mm, les distances a en mm, les indices de réfraction n$_e$ à une longueur

d'onde de 546,07 nm et les nombres d'Abbe $\nu_e$ sont réalisés comme suit :

| | | r | d | a | $n_e$ | $\nu_e$ |
|---|---|---|---|---|---|---|
| Plan objet | | | | | | |
| | | | | 31,99693 | | |
| LG1 | 1.1 | -334,94300 | 13,10000 | | 1,530190 | 76,58 |
| | | -39,24230 | | | | |
| | | | | 10,50000 | | |
| | 1.2 | -515.78900 | 7,50000 | | 1,677629 | 32,00 |
| | | 69,28260 | | | | |
| | 1.3 | | 17,25000 | | 1,498450 | 81,13 |
| | | -81,16600 | | | | |
| | | | | 0,15000 | | |
| | 1.4 | 131,46350 | 17,90000 | | 1,498450 | 81,13 |
| | | -51,95820 | | | | |
| | 1.5 | | 6,60000 | | 1,616640 | 44,27 |
| | | -386,81700 | | | | |
| | | | | 0,15000 | | |
| LG2 | 2.1 | 73,91790 | 11,50000 | | 1,498450 | 81,13 |
| | | -294,27300 | | | | |
| | | | | 0,92221 | | |
| | 2.21 | 95,03140 | 8,90000 | | 1,791789 | 25,89 |
| | | -258,51300 | | | | |
| | 2.22 | | 5,80000 | | 1,658030 | 39,40 |
| | | 39,24230 | | | | |

3.   Objectif selon la revendication 1 ou 2, comprenant une pupille de sortie d'un diamètre $D_{AP}$ = 47 mm.

4.   Utilisation d'un objectif selon les revendications précédentes dans des stéréomicroscopes du type télescope à grossissement variable, dans lesquels la lumière provenant d'un point extra-axial d'un objet pénètre sous un angle de champ $\omega$ dans des systèmes de grossissement, et qui sont munis de changeurs de têtes de grossissement (5.1, 5.2) avec lesquels on obtient $\tan(\omega) \geq 0,16$ au plus petit grossissement possible.

Fig.1

Fig.2

Objektebene

1.1
1.2
1.3
2.1
2.21
2.22

LG1
LG2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6271971 B
- JP 2001147378 A
- JP 2001021955 A
- EP 1369729 A2